(19) Europäisches Patentamt

European Patent Office

Office européen des brevets

(11) **EP 3 798 915 A1**

(12) **EUROPEAN PATENT APPLICATION**

(43) Date of publication:
**31.03.2021 Bulletin 2021/13**

(51) Int Cl.:
**G06N 3/04** (2006.01)     **G06N 3/08** (2006.01)
**G06N 5/00** (2006.01)     **G06N 3/063** (2006.01)

(21) Application number: **19199670.1**

(22) Date of filing: **25.09.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Continental Automotive GmbH
30165 Hannover (DE)**

(72) Inventor: **Deak-Meszlenyi, Regina
90411 Nürnberg (DE)**

(74) Representative: **Continental Corporation
c/o Conti Temic microelectronic GmbH
Intellectual Property
Sieboldstraße 19
90411 Nürnberg (DE)**

(54) **METHOD AND SYSTEM FOR AUTOMATICALLY IMPROVING NEURAL NETWORK ARCHITECTURE**

(57) The invention relates to a computer-implemented method for automatically providing a neural network (1), the neural network (1) comprising an encoder (2) and a decoder (3), wherein the encoder (2) comprises multiple cells (4), each cell (4) comprising a plurality of nodes (5, 6, 7), the method comprising the steps of:
- coupling the nodes (5, 6, 7) of a cell via mixed operations (8), each mixed operation (8) comprising a set of multiple different operations (S10);
- assigning an operation weighting factor to each operation of said set of different operations (S11);
- iteratively adapting the operation weighting factors of said operations based on an iterative optimization algorithm in order to determine an operation prioritization scheme for said operations (S12);
- associating multiple numbers of channels to a cell (4) (S13);
- assigning a channel weighting factor to each number of channels (S14);
- iteratively adapting the channel weighting factors based on an iterative optimization algorithm in order to determine a channel prioritization scheme for said number channels (S15);
- providing a neural network (1) with operations between the nodes based on said operation prioritization scheme and with a number of channels in the cells according to channel prioritization scheme (S16).

Fig. 5

## Description

The present invention relates generally to the field of artificial neural networks. More specifically, the invention relates to a method and a system for automatically improving neural network architecture for a given hardware and a given data processing task. The method and system is specifically applicable in automotive industry for designing neural networks configured to run on computing entities of vehicles in order to perform image processing tasks of a driving assistance system.

Neural network architecture optimization for embedded hardware, specifically embedded hardware included in vehicles, is usually a time-consuming manual task, and the final performance of the network is largely dependent on the skill and patience of the machine learning engineer.

Methods to automatize this task exist in the scientific literature, but these are usually not fast or flexible enough for commercial industrial applications. Prior art includes reinforcement learning and evolutionary algorithm based neural architecture search (NAS), and the more closely related differentiable architecture search (DARTS) and stochastic neural architecture search (SNAS). These methods are developed to search for optimal neural networks for classification tasks on generic hardware.

The prior art methods have several drawbacks. Reinforcement learning and evolutionary algorithm based NAS methods are flexible, but so slow, that implementing them for real world data and image processing tasks, that are more complex than classification, is infeasible for most applications. DARTS and SNAS are significantly faster, but not flexible in the sense that it can be applied to different image processing tasks, while optimizing for a specific embedded hardware.

It is an objective of the embodiments of the invention to provide a method for automatically creating a neural network which improves the speed of creating the network architecture, provides a neural network with improved performance and has a high flexibility regarding the properties of the hardware by which the neural network is executed. The objective is solved by the features of the independent claims. Preferred embodiments are given in the dependent claims. If not explicitly indicated otherwise, embodiments of the invention can be freely combined with each other.

According to an aspect, the invention refers to a method for automatically providing a neural network. The neural network comprises an encoder and a decoder. The encoder comprises multiple cells, wherein each cell comprises a plurality of nodes. The method comprises the following steps:
First, the nodes of a cell are coupled via mixed operations, wherein each mixed operation comprises a set of multiple different operations. To each operation of said set of different operations, an operation weighting factor is assigned.

The operation weighting factors of said operations are iteratively adapted based on an iterative optimization algorithm in order to determine an operation prioritization scheme for said operations. Said operation prioritization scheme may indicate which operation of said set of operations fits best for coupling a pair of nodes of the cell.

In addition, multiple numbers of channels are associated to a cell and a channel weighting factor is assigned to each number of channels. So, in other words, not only one number of channels is assigned to a certain cell but a set comprising multiple different numbers of channels, e.g. 4, 8, 16 and 32 channels.

The channel weighting factors are iteratively adapted based on an iterative optimization algorithm in order to determine a channel prioritization scheme for said number of channels. Said channel prioritization scheme may indicate which number of channels of said set of numbers of channels fits best for being used in the respective cell.

Finally, a neural network with operations between the nodes based on said operation prioritization scheme and with a number of channels in the cells according to channel prioritization scheme is provided.

Said method is advantageous because due to the operation prioritization scheme suitable operations for the coupling of a pair of nodes can be found. Based on the channel prioritization scheme, a suitable number of channels can be determined which provides a high performance paired with limited computational effort because the number of channels has significant influence on the network size and hardware efforts for executing computations on the neural network. So, in other words, the channel prioritization scheme improves for a tradeoff between processing performance and network size, respectively, hardware efforts. Thereby, neural networks can be specifically tailored for specific embedded hardware resources of vehicles which may comprise limited processing power and/or memory ressorces.

According to an embodiment, an operation of the set of multiple different operations is selected based on said operation prioritization scheme and based on information regarding the computational complexity of the respective operation. The operation prioritization scheme may indicate, which operation of the set of operations fits best for a respective edge between a pair of nodes, i.e. for coupling the output of one node with the input of a further node. Typically, a higher-order convolution operation (e.g. 5x5 - convolution) leads to better results than a lower-order convolution operation (e.g. 3x3 - convolution). However, the 5x5 - convolution has a significant higher computational complexity because a higher-order convolution operation comprises more weights to be trained and evaluated than a lower-order convolution operation. By taking not only the operation prioritization scheme but also the computational complexity of the respective operation into account, a tradeoff between computational performance and computational complexity, respectively, required hardware resources, like memory and processing power can be achieved.

According to an embodiment, said information regarding the computational complexity comprises information regarding the number of network parameters included in the respective operation. The number of network parameters is indicative for the computational complexity and can be used for deciding if the computational performance of an operation causing a higher computational effort leads to a significant better performance of the neural network which would justify the increase of computational effort.

According to an embodiment, an operation of the set of multiple different operations is selected based on a formula considering the operation weighting factor of a respective operation and the number of network parameters included in the respective operation. Based on such formula, an operation can be selected which ensures a tradeoff between performance of the neural network and computational effort.

According to an embodiment, an operation of the set of multiple different operations is selected based on a pareto optimal loss function which considers the number of network parameters included in a respective operation as an optimizing factor. Such pareto optimal loss function is used for multiple criteria decision making, i.e. for mathematical optimization problems involving more than one function to be optimized simultaneously. Therefore, based on the pareto optimal loss function, the neural network can not only be optimized regarding selecting an optimal operation but also regarding computational complexity which is directly associated with the number of network parameters.

According to an embodiment, a bilevel optimization is used for determining operation weighting factors and channel weighting factors. During the optimization procedure, the operation weighting factors are varied wherein the values of the operation weighting factors gradually diverge. The higher the operation weighting factor of a respective operation, the more suitable the operation is for being used in the respective edge between a pair of nodes.

According to an embodiment, the step of iteratively adapting the operation weighting factors of said operations and/or the step of iteratively adapting the channel weighting factors uses a backpropagation algorithm with a loss function. Thereby, an improved architecture of the neural network can be found with reduced computational effort.

According to an embodiment, the loss function is selected according to the data processing task which should be processed by the encoder. So, based on the selection of a suitable loss function, the encoder can be tailored to the respective data processing task, specifically, to the respective image processing task.

According to an embodiment, the step of iteratively adapting the operation weighting factors of said operations and/or the step of iteratively adapting the channel weighting factors uses a differentiable function. Thereby, one or more minima can be found with reduced computational effort by calculating the first derivative of the function.

According to an embodiment, a cell comprises at least one input node, one output node and at least one intermediate node arranged between the input node and the output node, wherein the intermediate node and the output node are coupled via output mixed operations, each output mixed operation comprising a set of multiple different operations and the method performs the steps of:

- assigning an operation weighting factor to each operation of said set of different operations of output mixed operation;
- iteratively adapting the operation weighting factors of said operations based on an iterative optimization algorithm in order to determine an output operation prioritization scheme for said operations; and
- selecting an operation of said set of different operations based on said output operation prioritization scheme.

Said embodiment is advantageous because not only the edges between the input node and an intermediate node, respectively, between a pair of intermediate nodes are optimized by using mixed operations, but also the output edges between the intermediate nodes and the output node which leads to a significant higher neural network performance.

According to an embodiment, the operations available in said mixed operations and/or output mixed operations are selected based on the hardware for which the neural network is tailored. So in other words, depending on the hardware on which the neural network should be executed, different sets of operations are available to be used in said mixed operations and/or output mixed operations. Thereby it is possible to use only operations which can be effectively computed by the respective hardware.

According to an embodiment, the step of providing a neural network comprises improving the neural network architecture not only on a cell-based level but improving the encoder architecture of the neural network by considering multiple or all cells of the encoder. Preferably, the architecture of the neural network is optimized as a whole, wherein each cell can have different architecture. Thereby the architecture of the neural network providing the encoder can be optimized as a whole and not only on a cell-based level.

According to an embodiment, the encoder of the neural network is tailored for one or more image processing tasks selected from a task list comprising the image processing tasks of object detection, keypoint detection, semantic segmentation, image classification, instance segmentation, panoptic segmentation and depth estimation. Thereby, the encoder is not optimized for image processing in general but for specific image processing tasks or a specific combination of tasks. For example, in case of realizing the method as software, as a first step, the image processing task can be selected and further features like available operations for mixed operations, loss functions to be used for optimizing the neural network etc. are selectable or not selectable depending on the selected image processing task.

According to a further aspect, the invention relates to a computer program product for automatically providing a neural network. The computer program product comprises a computer readable storage medium having program instructions embodied therewith, the program instructions being executable by a processor to cause the processor to execute a method according to anyone of the preceding claims.

According to yet a further aspect, the invention relates to a system for automatically providing a neural network. The neural network comprises an encoder and a decoder. The encoder comprises multiple cells, each cell comprising a plurality of nodes. The system is configured to execute the steps of:

- coupling the nodes of a cell via mixed operations, each mixed operation comprising a set of multiple different operations;
- assigning an operation weighting factor to each operation of said set of different operations;
- iteratively adapting the operation weighting factors of said operations based on an iterative optimization algorithm in order to determine an operation prioritization scheme for said operations;
- associating multiple numbers of channels to a cell;
- assigning a channel weighting factor to each number of channels;
- iteratively adapting the channel weighting factors based on an iterative optimization algorithm in order to determine a channel prioritization scheme for said number of channels;
- providing a neural network with operations between the nodes based on said operation prioritization scheme and with a number of channels in the cells according to channel prioritization scheme.

The term "vehicle" as used in the present disclosure may refer to a car, truck, bus, train or any other crafts.

The term "essentially" or "approximately" as used in the invention means deviations from the exact value by +/- 10%, preferably by +/- 5% and/or deviations in the form of changes that are insignificant for the function and/or for the traffic laws.

The various aspects of the invention, including its particular features and advantages, will be readily understood from the following detailed description and the accompanying drawings, in which:

Fig. 1 shows a schematic diagram of a neural network comprising an encoder and a decoder;

Fig. 2 schematically illustrates the internal structure of a cell of the neural network according to Fig. 1;

Fig. 3 schematically illustrates the structure of mixed operation including multiple mixed channel operations;

Fig. 4 illustrates the structure of mixed channel operation used in mixed operation according to fig. 3; and

Fig. 5 shows a schematic block diagram illustrating the steps of a method for providing a neural network with improved network architecture.

The present invention will now be described more fully with reference to the accompanying drawings, in which example embodiments are shown. The embodiments in the figures may relate to preferred embodiments, while all elements and features described in connection with embodiments may be used, as far as appropriate, in combination with any other embodiment and feature as discussed herein, in particular related to any other embodiment discussed further above. However, this invention should not be construed as limited to the embodiments set forth herein. Throughout the following description similar reference numerals have been used to denote similar elements, parts, items or features, when applicable.

The features of the present invention disclosed in the specification, the claims, examples and/or the figures may both separately and in any combination thereof be material for realizing the invention in various forms thereof.

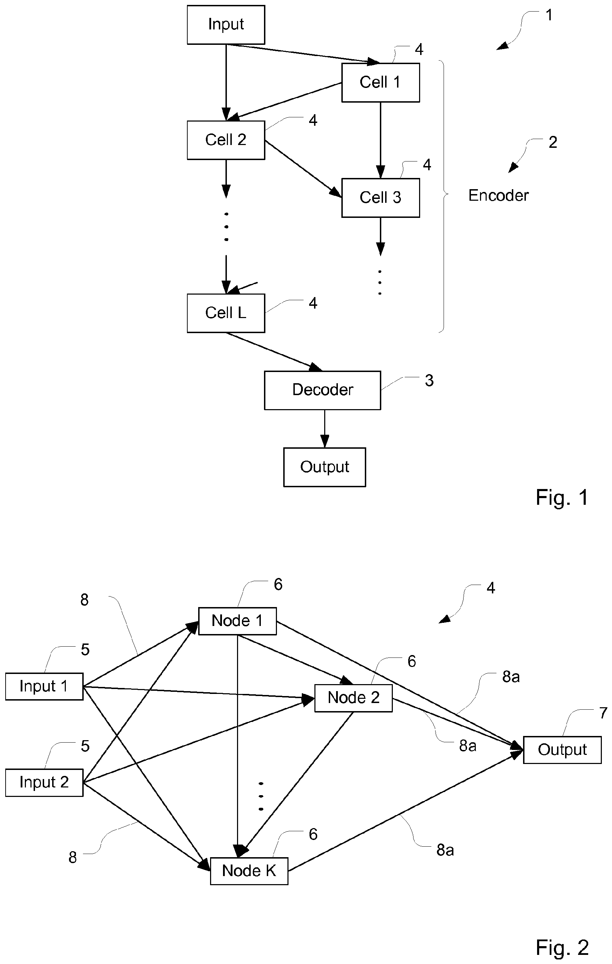

Fig. 1 shows a schematic block diagram of a neural network 1. The neural network 1 comprises an encoder 2 and a decoder 3. The encoder 2 comprises multiple cells 4. The encoder 2 processes input data, e.g. input data received by a camera, and creates features for the decoder 3. The decoder 3 may be a lightweight neural architecture that creates the output from the features, i.e. the decoder is task-specific and can be straightforwardly implemented for many specific data processing tasks. For example, the decoder may output class labels for classification or bounding box coordinates in object detection tasks. In a preferred embodiment, the neural network 1 is optimized for being used in image processing.

The encoder comprises multiple cells 4, wherein a schematic illustration of one cell 4 is shown in Fig. 2. The cells 4 may be directed acyclic graphs (DAG) which have at least one input node 5 (in a preferred embodiment shown in Fig. 2 two input nodes 5), an output node 7 and a sequence of internal nodes 6. The node 5, 6, 7 are connected by so-called edges which are illustrated by arrows in Fig. 2. The edges between the at least one input node 5 and the internal nodes 6, respectively, the edges coupling a pair of internal nodes 6 are realized by so-called mixed operations 8. The edges between the internal nodes 6 and the output node 7 are realized by so-called output mixed operations 8.

During architecture optimization, all possible edges i.e. the mixed operation 8 and output mixed operation 8a, inside the cell are active, as will be described below in closer detail. The output node 7 of the cell 4 outputs the merged output features from the internal nodes 6. Said merging may be achieved, for example, via concatenation or addition.

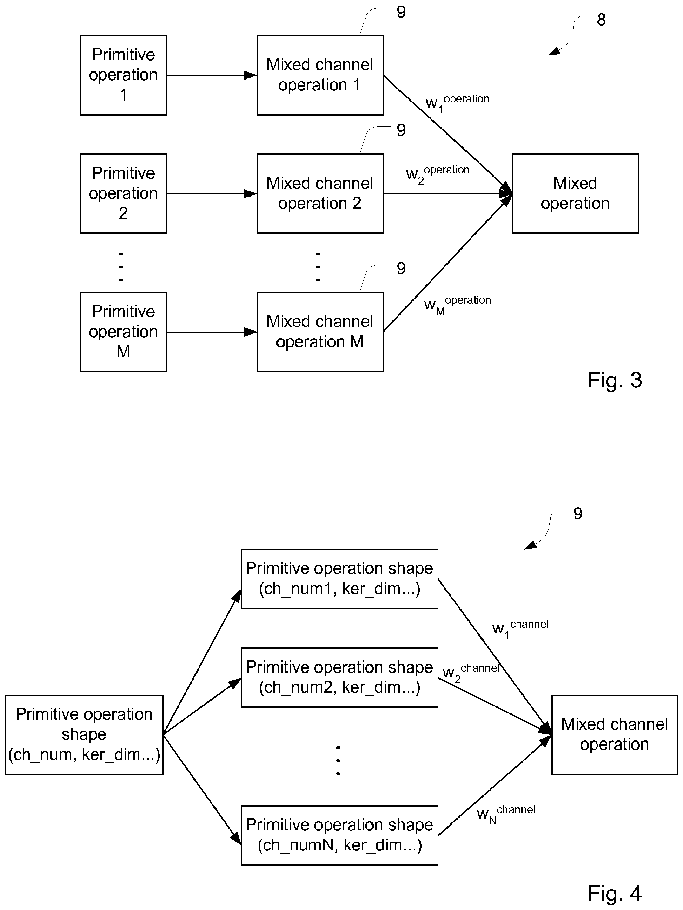

Fig. 3 illustrates the functionality of a mixed operation 8 during neural network search and improvement. Before architecture search, it is not clear what nodes of a certain cell should be connected and by which operation. So, the aim of mixed operation 8 is finding an operation and parameters associated with said operation which fits as best as possible at the respective position within the neural network 1.

Each mixed operation 8 is associated with a set of multiple operations, also referred to as primitive operations. The embodiment of Fig. 3 comprises multiple primitive operations 1 ... M, wherein M is an integer number. A primitive operation may be, for example, a convolution operation, e.g. 3x3 or 5x5 convolution, an average pooling or max pooling operation, specifically 3x3 average pooling or max pooling operation, identity operation or zero operation. It is worth mentioning that also further kinds of operations may be possible within said set of multiple operations.

Each primitive operation is associated with a weighting factor ($w_1^{operation}$ ... $w_M^{operation}$), in the following referred to as operation weighting factor.

At the beginning of the architecture search, every possible operation on every edge is initiated with the same weight. So, for example, in case of three possible operations, each operation weighting factor is 0.33, wherein $\sum_{i=1}^{M} w_i^{operation} = 1$.

During architecture search, the operation weighting factors are varied based on an iterative optimization algorithm, for example, gradient descent algorithm. Thereby it can be investigated which operation fits best to the respective edge of the cell 4.

The iterative optimization algorithm may use bilevel optimization, i.e. two optimization levels. In a first optimization level, the operation weighting factors are optimized and in a second step, parameters associatied with said operation weighting factors, specifically, parameters used for calculating said operation weighting factors are optimized. Said bilevel optimization may use one or more loss functions which have minimal value if the neural network comprises optimum or near-optimum performance when being used for the specific data processing task.

By means of said iterative optimization algorithm, an operation prioritization scheme is obtained. Said operation prioritization scheme comprises information regarding which operation of the set of operations fits best to the respective edge. The operation prioritization scheme may be, for example, a list which associates the respecting primitive operation with the resulting operation weighting factor developed during iterative optimization.

The selection of primitive operation for the respective edge can be performed by selecting the primitive operation with the highest operation weighting factor (best-performance-approach). However, the primitive operation with the highest operation may be associated with a significant higher network size, respectively, computational effort compared with a primitive operation which has a slightly lower operation weighting factor.

So in order to optimize for a tradeoff between performance and network size, it is suggested to not only consider the operation prioritization scheme but additionally to consider the number of network parameters included in a respective operation as a further optimizing factor. That approach is specifically useful when hardware resources are limited, for example, when the resulting neural network should be operated in an embedded hardware like a control unit of a vehicle.

Therefore, the step of selecting an operation of the set of available operations uses a formula which takes the operation prioritization scheme and the network size resulting from the respective operation into account wherein the formula provides as a result, which operation provides significant performance paired with reasonable network size.

For example, the set of operations may comprise 3x3 convolution and 5x5 convolution. The iterative optimization algorithm provides an operation prioritization scheme indicating that the 3x3 convolution has a weighting factor of 0.4 and 5x5 convolution has a weighting factor of 0.45. So, following the best-performance-approach, 5x5 convolution may be selected as operation at the respective edge.

However, 5x5 convolution may use, for example, twice as much network parameters than 3x3 convolution. So, in order to avoid a significant increase of network size which only leads to a limited increase of performance, the formula may indicate using 3x3 convolution instead of 5x5 convolution.

Preferably, the edges coupling the internal nodes 6 and the output node 7 may use output mixed operations 8a, wherein the description of mixed operation provided above similarly applies to output mixed operation 8. In other words, the architecture search algorithm also investigates for said output mixed operations 8a an operation out of a set of operations which provides the best tradeoff between performance and network size.

As shown in fig. 3, the mixed operation algorithm uses mixed channel operations 9. The functionality of said mixed channel operations 9 is shown in greater detail in Fig. 4.

Each primitive operation may be associated with a set including multiple numbers of channels. Said number of channels indicates how many channels are handled by a respective primitive operation. So, for example, a 3x3-convolution may comprise 8 channels, 16 channels or even 256 channels. The chosen number of channels may have influence on the performance and the computational effort of the neural network 1. More specifically, the number of trainable weights of a primitive convolutional operation may be determined by the convolutional kernel size (e.g. 3x3 or 5x5) and of the number of channels associated with the operation. So, for example, a 3x3 convolution with 8 channels has 3*3*8=72 weights, whereas a 3x3 convolution with 16 channels has 144 weights. Thus, the network size linearly increases with the number of channels.

Based on mixed channel operation 9 it is possible to determine the number of channels which fits at best for the respective operation. Preferably, the number of channels is defined cell-wise, i.e. all operations included in one cell use the same number of channels. So, based on mixed channel operation 9 it is possible to optimize the channel number while still achieving high performance.

The optimization of channel numbers can be also achieved using a bilevel optimization algorithm. First, a channel number set including multiple numbers of channels is defined for each cell. Said channel number set includes, for example, a maximum number of channels, e.g. 32 and some lower number of channels, e.g. 4, 8, 16. So ,the channel number set is {4, 8, 16, 32}.

During architecture search, each primitive operation is not only trained with a single predefined number of channels but with multiple different numbers of channels, in the example of Fig. 4 N channels, wherein N is an integer number. More particularly, each primitive operation may be trained with the maximum number of channels, and paths with fewer channel numbers are simulated by zeroing out values. I.e. if the max number of channels is 32, a 16 channel operation may be simulated by zeroing out the last 16 filters from the operation. So, for example, during mixed operation, not only 3x3 convolution with 16 channels is trained but also 3x3 convolution with 4, 8 and 32 channels. Each path of mixed channel operation may be associated with a channel weighting factor ($w_1^{channel}$ ... $w_N^{channel}$).

At the beginning of the architecture search, each path of mixed channel operation 9 is initiated with the same weight, i.e. $w_1^{channel} = w_2^{channel} = ... = w_N^{channel}$, wherein $\sum_{i=1}^{N} w_i^{channel} = 1$. So, for example, in case of four different numbers of channels, each operation weighting factor is 0.25.

During architecture search, the channel weighting factors are varied based on an iterative optimization algorithm, for example, gradient descent algorithm. The optimization algorithm may use a task specific loss function (e.g. cross entropy in case of classification). Thereby it can be investigated which channel number fits best to the respective cell 4, i.e. what number of channels leads to a good performance paired with reasonable network size, respectively.

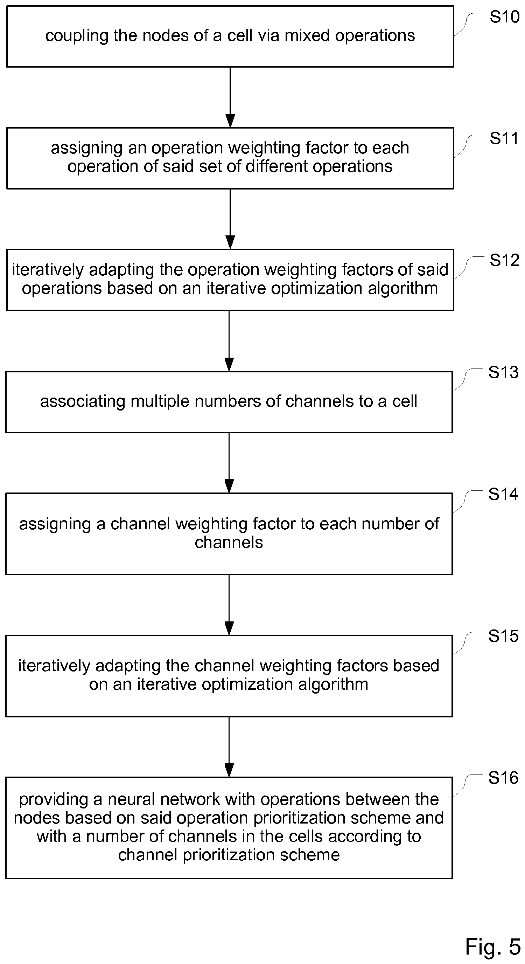

Fig. 5 shows a flow diagram illustrating the steps of a method for automatically providing a neural network.

First, the nodes of a cell 4 are coupled via mixed operations 8 (S10). Each mixed operation 8 comprises a set of multiple different operations, e.g. 3x3-convolution, 5x5-convolution, skip-operation etc.

An operation weighting factor is assigned to each operation of said set of different operations (S11).

Subsequently, the operation weighting factors of said operations are iteratively adapted based on an iterative optimization algorithm in order to determine an operation prioritization scheme for said operations (S12).

In addition, multiple numbers of channels are associated to a cell 4 (S13) and a channel weighting factor is associated to each number of channels (S14).

The channel weighting factors are iteratively adapted based on an iterative optimization algorithm in order to determine a channel prioritization scheme for said number channels (S15).

Finally, a neural network 1 is provided with operations between the nodes based on said operation prioritization scheme and with a number of channels in the cells according to channel prioritization scheme (S16).

It is worth mentioning that, preferably, operation weighting factors and channel weighting factors are adapted simultaneously. Particularly, at least steps S12 and S15 may run parallel.

It should be noted that the description and drawings merely illustrate the principles of the proposed invention. Those skilled in the art will be able to implement various arrangements that, although not explicitly described or shown herein, embody the principles of the invention.

**List of reference numerals**

| | |
|---|---|
| 1 | neural network |
| 2 | encoder |
| 3 | decoder |
| 4 | cell |
| 5 | input node |
| 6 | intermediate node |
| 7 | output node |
| 8 | mixed operation |
| 8a | output mixed operation |
| 9 | mixed channel operation |

**Claims**

**1.** Computer-implemented method for automatically providing a neural network (1), the neural network (1) comprising an encoder (2) and a decoder (3), wherein the encoder (2) comprises multiple cells (4), each cell (4) comprising a plurality of nodes (5, 6, 7), the method comprising the steps of:

- coupling the nodes (5, 6, 7) of a cell via mixed operations (8), each mixed operation (8) comprising a set of multiple different operations (S10);
- assigning an operation weighting factor to each operation of said set of different operations (S11);
- iteratively adapting the operation weighting factors of said operations based on an iterative optimization algorithm in order to determine an operation prioritization scheme for said operations (S12);
- associating multiple numbers of channels to a cell (4) (S13);
- assigning a channel weighting factor to each number of channels (S14);
- iteratively adapting the channel weighting factors based on an iterative optimization algorithm in order to determine a channel prioritization scheme for said number of channels (S15);
- providing a neural network (1) with operations between the nodes based on said operation prioritization scheme and with a number of channels in the cells according to channel prioritization scheme (S16).

2. Method according to claim 1, wherein an operation of the set of multiple different operations is selected based on said operation prioritization scheme and based on information regarding the computational complexity of the respective operation.

3. Method according to claim 2, wherein said information regarding the computational complexity comprises information regarding the number of network parameters included in the respective operation.

4. Method according to claim 2 or 3, wherein an operation of the set of multiple different operations is selected based on a formula considering the operation weighting factor of a respective operation and the number of network parameters included in the respective operation.

5. Method according to anyone of preceding claims, wherein an operation of the set of multiple different operations is selected based on a pareto optimal loss function which considers the number of network parameters included in a respective operation as an optimizing factor.

6. Method according to anyone of preceding claims, wherein a bilevel optimization is used for determining operation weighting factors and channel weighting factors.

7. Method according to anyone of preceding claims, wherein the step of iteratively adapting the operation weighting factors of said operations and/or the step of iteratively adapting the channel weighting factors uses a backpropagation algorithm with a loss function.

8. Method according to claim 7, wherein the loss function is selected according to the data processing task which is processed by the encoder (2).

9. Method according to anyone of the preceding claims, wherein the step of iteratively adapting the operation weighting factors of said operations and/or the step of iteratively adapting the channel weighting factors uses a differentiable function.

10. Method according to anyone of the preceding claims, wherein a cell (4) comprises at least one input node (5), one output node (7) and at least one intermediate node (6) arranged between the input node (5) and the output node (7), wherein the intermediate node (6) and the output node (7) are coupled via output mixed operations (8a), each output mixed operation (8a) comprising a set of multiple different operations and the method performs the steps of:

- assigning a operation weighting factor to each operation of said set of different operations of output mixed operation (8a);
- iteratively adapting the operation weighting factors of said operations based on an iterative optimization algorithm in order to determine an output operation prioritization scheme for said operations; and
- selecting an operation of said set of different operations based on said output operation prioritization scheme.

11. Method according to anyone of the preceding claims, wherein the operations available in said mixed operations (8) and/or output mixed operations (8a) are selected based on the hardware for which the neural network (1) is tailored.

12. Method according to anyone of the preceding claims, wherein the step of providing a neural network (1) comprises improving the neural network architecture not only on a cell-based level but improving the encoder architecture of the neural network (1) by considering multiple or all cells (4) of the encoder (2).

13. Method to anyone of the preceding claims, wherein the encoder (2) of the neural network (1) is tailored for an image processing task selected from a task list comprising the image processing tasks of object detection, keypoint detection, semantic segmentation, image classification, instance segmentation, panoptic segmentation and depth estimation.

14. Computer program product for automatically providing a neural network (1), the computer program product comprising a computer readable storage medium having program instructions embodied therewith, the program instructions being executable by a processor to cause the processor to execute a method according to anyone of the preceding claims.

15. System for automatically providing a neural network (1), the neural network (1) comprising an encoder (2) and a decoder (3), wherein the encoder (2) comprises multiple cells (4), each cell (4) comprising a plurality of nodes (5, 6, 7), the system being configured to execute the steps of:

- coupling the nodes (5, 6, 7) of a cell via mixed operations (8), each mixed operation (8) comprising a set of multiple different operations (S10);
- assigning an operation weighting factor to each operation of said set of different operations (S11);
- iteratively adapting the operation weighting factors of said operations based on an iterative optimization algorithm in order to determine a operation prioritization scheme for said operations (S12);
- associating multiple numbers of channels to a cell (4) (S13);
- assigning an channel weighting factor to each number of channels (S14);
- iteratively adapting the channel weighting factors based on an iterative optimization algorithm in order to determine a channel prioritization scheme for said number of channels (S15);
- providing a neural network (1) with operations between the nodes based on said operation prioritization scheme and with a number of channels in the cells according to channel prioritization scheme (S16).

Fig. 1

Fig. 2

Fig. 3

Fig. 4

coupling the nodes of a cell via mixed operations — S10

assigning an operation weighting factor to each operation of said set of different operations — S11

iteratively adapting the operation weighting factors of said operations based on an iterative optimization algorithm — S12

associating multiple numbers of channels to a cell — S13

assigning a channel weighting factor to each number of channels — S14

iteratively adapting the channel weighting factors based on an iterative optimization algorithm — S15

providing a neural network with operations between the nodes based on said operation prioritization scheme and with a number of channels in the cells according to channel prioritization scheme — S16

Fig. 5

Europäisches
Patentamt

European
Patent Office

Office européen
des brevets

## EUROPEAN SEARCH REPORT

Application Number

EP 19 19 9670

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RICHARD SHIN ET AL: "DIFFERENTIABLE NEURAL NETWORK ARCHITECTURE SEARCH", SIXTH INTERNATIONAL CONFERENCE ON LEARNING REPRESENTATIONS (ICLR), 30 April 2018 (2018-04-30), XP055678153, * the whole document * | 1-15 | INV.<br>G06N3/04<br>G06N3/08<br>G06N5/00<br>G06N3/063 |
| A | RENQIAN LUO ET AL: "Neural Architecture Optimization", ARXIV.ORG, CORNELL UNIVERSITY LIBRARY, 201 OLIN LIBRARY CORNELL UNIVERSITY ITHACA, NY 14853, 22 August 2018 (2018-08-22), XP081491570, * abstract * * page 2 - page 4; figure 1 * | 1-15 | |
| A | EFI KOKIOPOULOU ET AL: "Fast Task-Aware Architecture Inference", ARXIV.ORG, CORNELL UNIVERSITY LIBRARY, 201 OLIN LIBRARY CORNELL UNIVERSITY ITHACA, NY 14853, 15 February 2019 (2019-02-15), XP081029554, * abstract * * page 1 - page 3; figures 1,2 * | 1-15 | |

TECHNICAL FIELDS
SEARCHED (IPC)

G06N

The present search report has been drawn up for all claims

| Place of search | Date of completion of the search | Examiner |
|---|---|---|
| The Hague | 24 March 2020 | Malatesta, Lori |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)